# EUROPEAN PATENT APPLICATION

(11) **EP 3 979 362 A1**
(43) Date of publication of application: **06.04.2022**
(21) Application number: 20814868.4
(22) Date of filing: 20.05.2020
(51) Int. Cl.: H01M 4/13, H01M 10/0587, H01M 2/26

(54) **NONAQUEOUS ELECTROLYTE SECONDARY BATTERY**

(30) Priority: 28.05.2019 JP 2019099055
(71) Applicant: SANYO Electric Co., Ltd., Daito-shi Osaka 574-8534 (JP)
(72) Inventor: SAKIDA, Takafumi, Chuo-ku, Osaka-shi, Osaka 540-6207 (JP)
(74) Representative: Vigand, Philippe
(86) International application number: PCT/JP2020/019923
(87) International publication number: WO 2020/241410

(57) **Abstract**

A nonaqueous electrolyte secondary battery according to one embodiment of the present disclosure is provided with: a wound electrode body that is obtained by winding a belt-like positive electrode (11) and a belt-like negative electrode (12), with a separator being interposed therebetween, in the longitudinal direction; and a battery case in which the electrode body is contained. This nonaqueous electrolyte secondary battery is characterized in that the positive electrode (11) comprises: a positive electrode collector (30); a positive electrode mixture layer (32) which is formed on at least a part of the surface of the positive electrode collector (30); a conductive positive electrode tab (20) which has one end (20a) connected to a positive electrode exposure part (34) where the positive electrode mixture layer (32) is not formed on the surface of the positive electrode collector (30), while having the other end (20b) extend in the short-side direction of the positive electrode (11) from the positive electrode collector (30); and a protection member (36) which is arranged on the surface of the positive electrode collector (30) so as to cover at least the one end (20a) of the positive electrode tab (20) and the positive electrode exposure part (34). This nonaqueous electrolyte secondary battery is also characterized in that the protection member (36) has one or more cuts (38) in both ends of the positive electrode (11) in the longitudinal direction.

## Description

### TECHNICAL FIELD

The present disclosure relates to a non-aqueous electrolyte secondary battery.

### BACKGROUND ART

High-capacity and high-power non-aqueous electrolyte secondary batteries are recently being developed which are used for electric vehicles, power storage facilities, and the like. Such high capacity and high power of the battery cause a large quantity of heat generated on internal short circuit of the battery, and it is required to reduce the risk of occurrence of the internal short circuit. On the surface of the positive electrode of the battery, there is formed a positive electrode exposed part from which the surface of a positive electrode current collector is exposed, and a tab for current collection is connected to the positive electrode exposed part. Patent Literature 1 discloses a method of reducing the risk of occurrence of internal short circuit by covering the positive electrode tab with an insulating tape.

### CITATION LIST

### PATENT LITERATURE

PATENT LITERATURE 1: Japanese Unexamined Patent Application Publication No. 2003-132875

### SUMMARY

### TECHNICAL PROBLEM

However, in Patent Literature 1, there is not investigated an influence on the battery in the case where the battery receives impact from the outside. Specifically, when the battery deforms due to the impact from the outside, there is a possibility that the separator fractures by the step in the end part of the insulating tape which is pasted on a positive electrode tab since the insulating tape cannot follow the deformation of the battery and that internal short circuit occurs at the portion of the fracture.

It is an advantage of the present disclosure to provide a non-aqueous electrolyte secondary battery excellent in safety in the case of reception of impact from the outside.

### SOLUTION TO PROBLEM

A non-aqueous electrolyte secondary battery which is an aspect of the present disclosure is a non-aqueous electrolyte secondary battery comprising: a winding-shaped electrode assembly having a belt-shaped positive electrode and a belt-shaped negative electrode wound along their longitudinal direction via a separator; and a battery case housing the electrode assembly, wherein that the positive electrode has a positive electrode current collector, a positive electrode mixture layer formed on at least part of a surface of the positive electrode current collector, a conductive positive electrode tab having one end part connected to a positive electrode exposed part in which the positive electrode mixture layer is not formed on the surface of the positive electrode current collector and another end part extending from the positive electrode current collector in a transverse direction of the positive electrode, and a protection member provided on the surface of the positive electrode current collector so as to cover at least the one end part of the positive electrode tab and the positive electrode exposed part, and the protection member has one or a plurality of cuts in each of both end parts of the protection member in the longitudinal direction of the positive electrode.

### ADVANTAGEOUS EFFECT OF INVENTION

According to the non-aqueous electrolyte secondary battery according to the present disclosure, there may be enhanced safety in the case of reception of impact from the outside.

### BRIEF DESCRIPTION OF DRAWINGS

FIG. 1 is an axial sectional view of a non-aqueous electrolyte secondary battery which is an example of embodiments.
FIG. 2 is a perspective view of a winding-shaped electrode assembly of the non-aqueous electrolyte secondary battery shown in FIG. 1.
FIG. 3 is a plan development showing a relationship in which a positive electrode and a negative electrode in the electrode assembly face each other in an example of embodiments.
FIG. 4 is a longitudinal sectional view of the positive electrode in an example of embodiments.
FIG. 5(a) is a plan view having the vicinity of a positive electrode tab in an example of embodiments expanded, and FIGS. 5(b) and 5(c) are views corresponding to FIG. 5(a) in other examples of embodiments.

### DESCRIPTION OF EMBODIMENTS

Hereafter, examples of embodiments of a non-aqueous electrolyte secondary battery according to the present disclosure are described in detail with reference to the drawings. In the following description, specific shapes, materials, numerical values, directions, and the like are exemplary illustrations for easy understanding of the present disclosure, and they can be properly modified to meet the specifications of the non-aqueous electrolyte secondary battery. Moreover, it is supposed from the first that when the following description includes a plurality of embodiments and modifications, characteristic portions of those be properly combined and used.

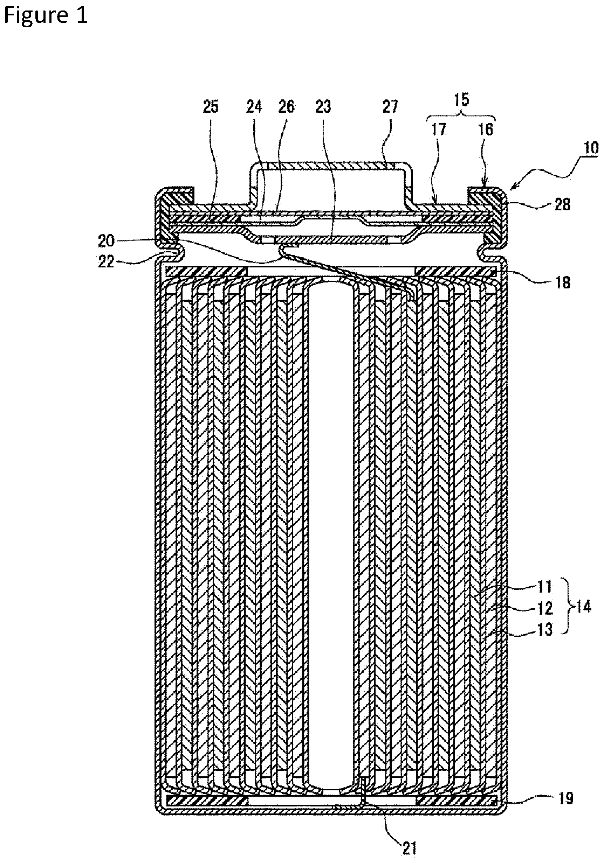

FIG. 1 is an axial sectional view of a non-aqueous electrolyte secondary battery 10 which is an example of embodiments. As exemplarily shown in FIG. 1, the non-aqueous electrolyte secondary battery 10 has an electrode assembly 14 and a non-aqueous electrolyte (not shown) housed in a battery case 15. As a non-aqueous solvent (organic solvent) of the non-aqueous electrolyte, there can be used carbonates, lactones, ethers, ketones, esters, and the like, and there can be mixed and used two kinds or more of these solvents. For example, there can be used cyclic carbonates such as ethylene carbonate, propylene carbonate, and butylene carbonate, chain carbonates such as dimethyl carbonate, ethyl methyl carbonate, and diethyl carbonate, mixed solvents of the cyclic carbonates and the chain carbonates, and the like. As an electrolyte salt of the non-aqueous electrolyte, there can be used LiPF₆, LiBF₄, LiCF₃SO₃, and the like, and mixtures of these. The amount of the electrolyte salt dissolved in the non-aqueous solvent can be set, for example, to 0.5 to 2.0 mol/L. Notably, a sealing assembly 17 side of the battery case 15 is hereafter described as being on the "upside", and a bottom part side of an exterior member 16 as being on the "downside", for convenience of description.

The exterior member 16 and the sealing assembly 17 constitute the battery case 15. Insulating plates 18 and 19 are provided on the upside and the downside of the electrode assembly 14, respectively. A positive electrode tab 20 extends to the sealing assembly 17 side through a through hole of the insulating plate 18, and is welded onto a lower surface of a filter 23 which is a bottom plate of the sealing assembly 17. In the non-aqueous electrolyte secondary battery 10, a cap 27 which is a top board of the sealing assembly 17 electrically connected to the filter 23 is a positive electrode terminal. Meanwhile, a negative electrode tab 21 extends to the bottom part side of the exterior member 16 through a through hole of the insulating plate 19, and is welded onto an inner surface of the bottom part of the exterior member 16. In the non-aqueous electrolyte secondary battery 10, the exterior member 16 is a negative electrode terminal. When the negative electrode tab 21 is installed near the outer winding end, the negative electrode tab 21 extends to the bottom part side of the exterior member 16 through the outside of the insulating plate 19, and is welded onto the inner surface of the bottom part of the exterior member 16.

The exterior member 16 is a bottomed cylindrical metal-made container. A gasket 28 is provided between the exterior member 16 and the sealing assembly 17 and secures a sealing property of the interior of the battery case 15. The exterior member 16 has a projecting portion 22, which supports the sealing assembly 17, formed, for example, by pressing its lateral surface part from the outside. The projecting portion 22 is preferably formed into an annular shape along the circumferential direction of the exterior member 16, and supports the sealing assembly 17 on its upper surface.

The sealing assembly 17 has the filter 23, a lower vent member 24, an insulating member 25, an upper vent member 26, and the cap 27 which are stacked sequentially from the electrode assembly 14 side. Each of the members constituting the sealing assembly 17 has a disc shape or a ring shape, for example, and the members except the insulating member 25 are electrically connected to one another. The lower vent member 24 and the upper vent member 26 are connected to each other at their center parts, and the insulating member 25 is interposed between their peripheral edges. When an internal pressure of the battery rises due to abnormal heat generation, the lower vent member 24 fractures, for example, this causes the upper vent member 26 to expand to the cap 27 side and to separate from the lower vent member 24, and this interrupts electric connection therebetween. When the internal pressure further rises, the upper vent member 26 fractures to allow gas to be discharged from an opening of the cap 27.

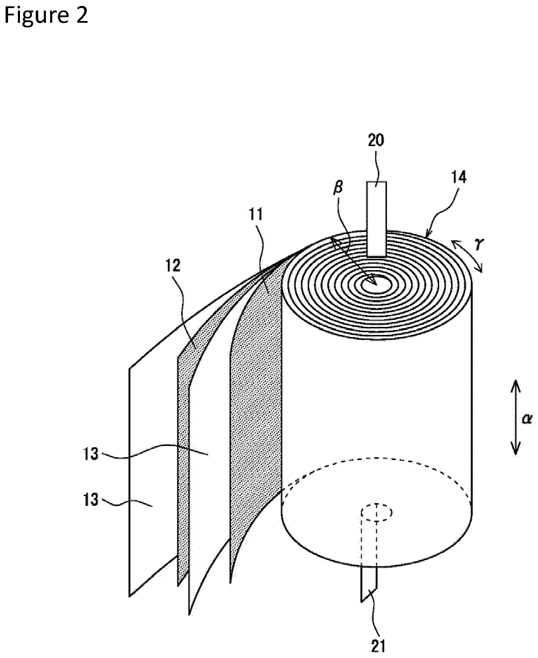

Hereafter, the electrode assembly 14 is described with reference to FIG. 2. FIG. 2 is a perspective view of the winding-shaped electrode assembly 14 of the non-aqueous electrolyte secondary battery 10 shown in FIG. 1. The electrode assembly 14 has a winding-shaped structure in which the positive electrode 11 and the negative electrode 12 are wound via separators 13. Each of the positive electrode 11, the negative electrode 12, and the separators 13 is formed into a belt shape, and they are wound into a spiral shape around the winding axis thereby to be brought into a state where they are alternately stacked in a radial direction β of the electrode assembly 14. Hereafter, an inner winding side means the winding axis side in the radial direction β, and an outer winding side means the outer side of the electrode assembly 14 in the radial direction β. In the present embodiment, in the electrode assembly 14, longitudinal directions of the positive electrode 11 and the negative electrode 12 become a winding direction γ, and transverse directions of the positive electrode 11 and the negative electrode 12 become a winding axis direction α. Notably, there is hereafter a case where the longitudinal directions of the positive electrode 11 and the negative electrode 12 are referred to as the longitudinal direction γ and the transverse directions of the positive electrode 11 and the negative electrode 12 are referred to as the transverse direction α. The positive electrode tab 20 extends toward the upside in the winding axis direction α from the main body part of the electrode assembly 14, and the negative electrode tab 21 extends toward the downside in the winding axis direction α from the main body part of the electrode assembly 14.

For the separators 13, there can be used porous films having ion permeability and an insulation property. Specific examples of the porous films include a microporous thin film, woven fabric, and nonwoven fabric. For the material of the separator 13, there can be used polyolefin-based resins such as polyethylene and polypropylene. The thickness of the separator 13 is 8 µm to 50 µm, for example, preferably 10 µm to 20 µm. The separator 13 has a melting point, for example, of about 130°C to about 180°C. Moreover, the separator 13 may have an aramid coating or the like formed on its surface in order to improve heat resistance and the like.

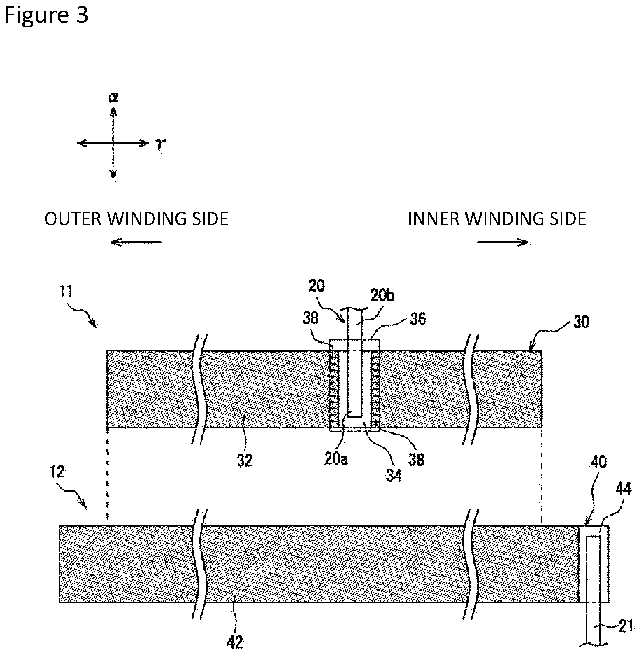

Next, the positive electrode 11 and the negative electrode 12 are described with reference to FIG. 3. FIG. 3 is a plan development showing a relationship in which the positive electrode 11 and the negative electrode 12 in the electrode assembly 14 face each other in an example of embodiments. The positive electrode 11 and the negative electrode 12 are developed in the right-left direction, where the right direction designates the inner winding side and the left direction designates the outer winding side. The negative electrode 12 is larger than the positive electrode 11 in the longitudinal direction γ and the transverse direction α in view of preventing lithium from precipitating in charging.

First, the positive electrode 11 is described. The positive electrode 11 has a belt-shaped positive electrode current collector 30, a positive electrode mixture layer 32, a conductive positive electrode tab 20, and a protection member 36 indicated by a dot-dash line. The positive electrode mixture layer 32 is formed on at least part of a surface of the positive electrode current collector 30, and the positive electrode current collector 30 has a positive electrode exposed part 34 in which the positive electrode mixture layer 32 is not formed on the surface. The positive electrode mixture layer 32 is preferably formed on both surfaces of the positive electrode current collector 30 in view of making the capacity of the battery high. For the positive electrode current collector 30, there can be used, for example, foil of a metal such as aluminum, a film having the metal disposed on a surface layer, and the like. A preferable positive electrode current collector 30 is metallic foil the main component of which is aluminum or aluminum alloy. The thickness of the positive electrode current collector 30 is 10 µm to 30 µm, for example.

The positive electrode mixture layer 32 preferably includes a positive electrode active material, a conductive agent, and a binder. The positive electrode mixture layer 32 is produced, for example, by applying positive electrode slurry including the positive electrode active material, the conductive agent, the binder, and a solvent such as N-methyl-2-pyrrolidone (NMP) on both surfaces of the positive electrode current collector 30, and after that, drying and compressing the coating film.

Examples of the positive electrode active material can include a lithium-containing composite oxide containing a transition metal element such as Ni, Co, and Mn. Not specially limited, the lithium-containing composite oxide is preferably a composite oxide expressed by the general formula Li₁₊ₓMO₂ (in the formula, -0.2<x≤0.2, and M includes at least one of the group consisting of Ni, Co, and Mn). The lithium-containing composite oxide can be obtained by mixing a lithium source such as lithium hydroxide into a composite oxide containing a transition metal element and firing it.

Examples of the conductive agent include carbon materials such as carbon black (CB), acetylene black (AB), Ketjen black, and graphite, and the like. Examples of the binder include fluorine-based resins such as polytetrafluoroethylene (PTFE) and polyvinylidene fluoride (PVdF), polyacrylonitrile (PAN), polyimide (PI), acrylic resins, polyolefin-based resins, and the like. Moreover, these resins may be used together with carboxymethylcellulose (CMC) or its salt, polyethylene oxide (PEO), or the like. A single kind of these may be solely used or two kinds or more of these may be combined and used.

Next, the positive electrode tab 20 has one end part 20a connected to the positive electrode exposed part 34 and another end part 20b extending in the transverse direction α of the positive electrode current collector 30. The one end part 20a can be joined to the positive electrode exposed part 34, for example, by ultrasonic welding. While the structure material of the positive electrode tab 20 is not specially limited as long as it has conductivity, it is preferably composed of metal the main component of which is aluminum.

The positive electrode tab 20 can be provided at the center part of the positive electrode 11 in the longitudinal direction γ, for example, in view of current collectability. In this case, the positive electrode tab 20 is connected to the positive electrode exposed part 34 provided at the center part in the longitudinal direction γ, and when it is wound as the electrode assembly 14, the positive electrode tab 20 is arranged to protrude from the end face in the winding axis direction α at the middle position of the electrode assembly 14 in the radial direction β as shown in FIG. 2. Moreover, the positive electrode exposed part 34 may be formed except at the center part in the longitudinal direction γ, and it may be formed, for example, near an end part in the longitudinal direction γ. The positive electrode exposed part 34 is provided, for example, by intermittent application by which a part of the positive electrode current collector 30 is not coated with the positive electrode slurry.

The positive electrode tab 20 may be connected to the positive electrode exposed part 34 on any of the inner winding side and the outer winding side. Moreover, one or a plurality of positive electrode tabs 20 may be provided. Moreover, one or a plurality of positive electrode exposed parts 34 may be provided, and there may be a positive electrode exposed part 34 that the positive electrode tab 20 is not connected to. The positive electrode exposed part 34 is preferably provided on the surface, of the positive electrode current collector 30, that is on the opposite side in the radial direction β at the position corresponding to the positive electrode exposed part 34 which the positive electrode tab 20 is connected to.

As shown in FIG. 3, the protection member 36 is provided on the surface of the positive electrode current collector 30 so as to cover at least the one end part 20a of the positive electrode tab 20 and the positive electrode exposed part 34. The protection member 36 preferably at least covers a portion, of the positive electrode tab 20, that faces the negative electrode 12 via the separator 13. The protection member 36 is an insulative member for causing the positive electrode tab 20 and the positive electrode exposed part 34 that is around the positive electrode tab 20 not to make internal short circuit with the facing negative electrode mixture layer 42 when the separator 13 is broken. The protection member 36 is preferably provided on a surface of the positive electrode mixture layer 32 so as to go across the positive electrode tab 20 and the positive electrode exposed part 34 that is around the positive electrode tab 20 in the longitudinal direction γ of the positive electrode 11. Moreover, the protection member 36 is preferably longer than the positive electrode 11 in the transverse direction α of the positive electrode 11.

The protection member 36 is an adhesive tape having a base material part and an adhesive part formed on one of the surfaces of the base material part, for example. For example, there can be provided a heat resistant layer including inorganic particles such as metal oxide between the base material part and the adhesive part. The base material part may be an insulative resin and, for example, there can be used PPS (polyphenylene sulfide), PEEK (polyether ether ketone), PI (polyimide), PP (polypropylene), PET (polyethylene terephthalate), PBT (polybutylene terephthalate), and the like. The thickness of the base material part is 5 µm or more and 50 µm or less, for example, preferably 10 µm or more and 30 µm or less.

The adhesive part is a place for causing the protection member 36 to adhere onto the surface of the positive electrode 11. The thickness of the adhesive part is 1 µm or more and 30 µm or less, for example, preferably 5 µm or more and 25 µm or less. The adhesive part can include at least one of a rubber-based polymer and an acrylic polymer. Since the rubber-based polymer and the acrylic polymer have adhesion, they can cause the protection member 36 to adhere onto the surface of the positive electrode 11. To the adhesive part, there can be further added, for example, a silicone-based polymer.

The protection member 36 has one or a plurality of cuts 38 in each of both end parts of the protection member 36 in the longitudinal direction γ of the positive electrode 11. Since the cuts 38 can give flexibility to both end parts in the longitudinal direction γ, they make the protection member 36 readily follow the positive electrode 11 to deform even when the battery deforms upon impact from the outside. Thereby, there scarcely occurs the fracture of the separator 13 due to steps at both end parts of the protection member 36, and internal short circuit can be restrained. The cuts 38 are preferably provided at least at a portion pasted on the surface of the positive electrode 11, and may also be provided at a portion not pasted on the surface of the positive electrode 11.

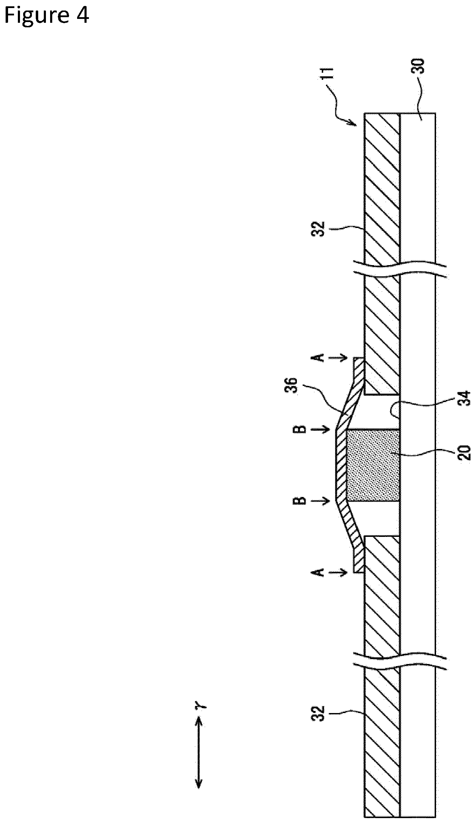

Herein, steps arising around the positive electrode tab 20 are described with reference to FIG. 4. FIG. 4 is a sectional view in the longitudinal direction γ in an example of embodiments. Since both end parts of the protection member 36 are on the positive electrode mixture layer 32, they lead to steps A. Moreover, corners of the positive electrode tab 20 lead to steps B and are covered by the protection member 36. As mentioned above, the protection member 36 needs to have certain thickness and hardness for protecting the positive electrode tab 20 and the positive electrode exposed part 34 therearound when the separator 13 breaks due to some cause. Meanwhile, upon impact from the outside, the protection member 36 is to push the separator 13 strongly to cause this to fracture if both end parts do not follow the deformation of the battery. Therefore, providing the cuts 38 in both end parts of the protection member 36 can give flexibility to both end parts of the protection member 36 for tolerance to the impact from the outside while the protection member 36 protects the positive electrode tab 20 and the positive electrode exposed part 34 therearound.

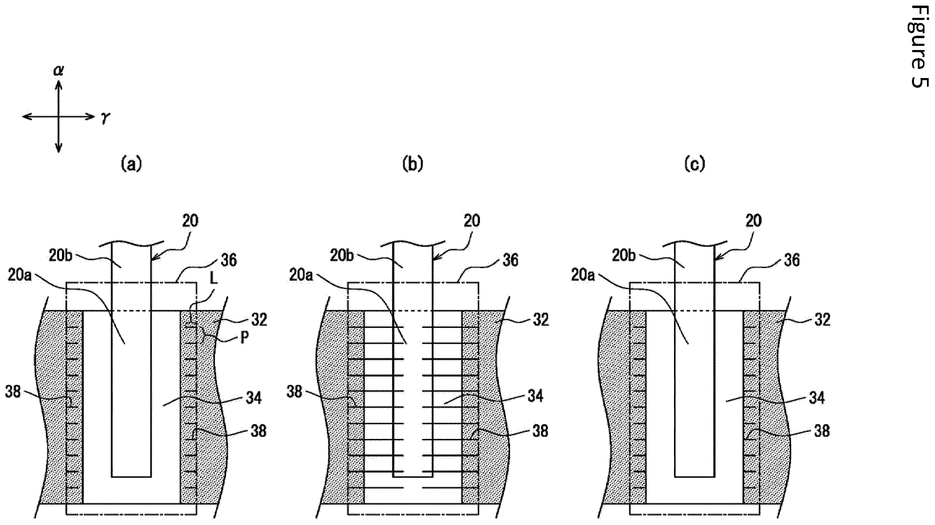

Next, the cuts 38 are described with reference to FIG. 5. FIG. 5(a) is a plan view having the vicinity of the positive electrode tab in an example of embodiments expanded, and FIGS. 5(b) and 5(c) are views corresponding to FIG. 5(a) in other examples of embodiments. Eleven cuts 38, shown in FIG. 5(a), are provided at each of both ends of the protection member 36 in the longitudinal direction γ of the positive electrode 11. Any of the cuts 38 extends from either of both ends of the protection member 36 so as not to face the positive electrode tab 20, and those cuts 38 have a fixed length L. Moreover, the cuts 38 are arranged at intervals P in the transverse direction α of the positive electrode 11.

Since cuts 38 shown in FIG. 5(b) are longer than the cuts 38 in FIG. 5(a), they make the flexibility at both end parts of the protection member 36 higher and make the separator scarcely fracture by the step A (refer to FIG. 4) upon reception of impact from the outside. On the other hand, since the cuts 38 shown in FIG. 5(b) face the positive electrode tab 20, they cause a possibility that the step B (refer to FIG. 4) at the end part of the positive electrode tab 20 breaks the protection member 36 upon reception of impact from the outside and this further causes the separator 13 also to fracture. Accordingly, the cuts 38 preferably do not face the positive electrode tab 20.

One end of any of cuts 38 shown in FIG. 5(c) does not extend to either of both ends of the protection member 36. This can also give flexibility to both ends of the protection member 36.

The cuts 38 are not limited to those in the examples shown in FIGS. 5(a) to 5(c) but the number, the length L, the intervals P, and the like of these can be properly modified. Different numbers, lengths L, intervals P, and the like of the cuts 38 may be employed respectively at both ends of the protection member 36. Moreover, the lengths L and the intervals P of the cuts 38 do not have to be fixed. Moreover, the cuts 38 may be broken lines, not limited to continuous lines.

The negative electrode 12 in the present embodiment is as follows, for example.

The negative electrode 12 has a belt-shaped negative electrode current collector 40, a negative electrode mixture layer 42, and a conductive negative electrode tab 21. The negative electrode mixture layer 42 is formed on at least part of a surface of the negative electrode current collector 40, and the negative electrode current collector 40 has a negative electrode exposed part 44 in which the negative electrode mixture layer 42 is not formed on the surface. The negative electrode mixture layer 42 is preferably formed on both surfaces of the negative electrode current collector 40 in view of making the capacity of the battery high. For the negative electrode current collector 40, there can be used, for example, foil of a metal such as copper, a film having the metal disposed on a surface layer, and the like. A preferably negative electrode current collector 40 is metallic foil the main component of which is copper or copper alloy. The thickness of the negative electrode current collector 40 is 5 µm to 30 µm, for example.

The negative electrode mixture layer 42 preferably includes a negative electrode active material and a binder. The negative electrode mixture layer 42 is produced, for example, by applying negative electrode slurry including the negative electrode active material, the binder, water, and the like on both surfaces of the negative electrode current collector 40, and after that, drying and compressing the coating film.

The negative electrode active material is not specially limited as long as it can reversibly store and release lithium ions, and there can be used carbon materials such as natural graphite and artificial graphite, metals allowed with lithium such as Si and Sn, or alloys and oxides including these, and the like, for example. For the binder included in the negative electrode mixture layer 42, there can be used fluorine-based resins such as polytetrafluoroethylene (PTFE) and polyvinylidene fluoride (PVdF), polyacrylonitrile (PAN), polyimide (PI), acrylic resins, polyolefin-based resins, and the like, for example. When the negative electrode slurry is prepared with an aqueous solvent, there can be used styrene-butadiene rubber (SBR), CMC or its salt, polyacrylic acid or its salt, polyvinyl alcohol, and the like. A single kind of these may be solely used or two kinds or more of these may be combined and used.

The negative electrode exposed part 44 is a portion to which the negative electrode tab 21 is connected and is a portion in which a surface of the negative electrode current collector 40 is not covered by the negative electrode mixture layer 42. The negative electrode tab 21 is joined to the negative electrode exposed part 44, for example, by ultrasonic welding. The structure material of the negative electrode tab 21 is not specially limited as long as it has conductivity. The negative electrode tab 21 is preferably composed of metal the main component of which is nickel or copper or metal including both nickel and copper.

The negative electrode exposed part 44 is provided, for example, at an end part, of the negative electrode 12, that is on the inner winding side in the longitudinal direction γ. In this case, as shown in FIG. 2, the negative electrode tab 21 is arranged to protrude from the end face in the winding axis direction α at the center part of the electrode assembly 14 in the radial direction β. A protection member 36 may be pasted on the surface of the negative electrode tab 21. The negative electrode exposed part 44 can be provided, for example, by intermittent application by which a part of the negative electrode current collector 40 is not coated with the negative electrode slurry. The arrangement position of the negative electrode tab 21 is not limited to that in the example shown in FIG. 2 but the negative electrode tab 21 may be provided at an end part, of the negative electrode 12, that is on the outer winding side. Moreover, negative electrode tabs 21 may be provided at both the end part on the inner winding side and the end part on the outer winding side. In this case, current collectability is improved. The end part, of the negative electrode 12, on the outer winding side may be electrically connected to the exterior member 16 by bringing the exposed part at the end part, of the negative electrode 12, on the outer winding side into contact with the inner peripheral surface of the exterior member 16.

### EXAMPLES

While the present disclosure is hereafter further described with examples, the present disclosure is not limited to these examples. Notably, hereafter, the widths of the positive electrode tab, the positive electrode exposed part, the protection member, the negative electrode tab, and the negative electrode exposed part are the lengths of those in the longitudinal directions γ of the positive electrode and the negative electrode.

### <Example 1>

### [Production of Positive Electrode]

Lithium hydroxide was mixed such that the element of lithium had the ratio of 1.025 relative to the total molar amount of the metal elements in nickel-cobalt-aluminum composite oxide expressed as Ni_{0.82}Co_{0.15}Al_{0.03}O₂, and lithium nickel-cobalt-aluminum oxide expressed as LiNi_{0.82}Co_{0.15}Al_{0.03}O₂ was obtained after firing in an oxygen atmosphere at 750° for 18 hours.

Next, 100 pts. mass of LiNi_{0.82}Co_{0.1}Al_{0.03}O₂, 1.0 pts. mass of acetylene black (AB), and 0.9 pts. mass of polyvinylidene fluoride (PVdF) were mixed, and an appropriate amount of N-methyl-2-pyrrolidone (NMP) was added to prepare the positive electrode slurry. Intermittent application of the positive electrode slurry was performed on both surfaces of a long strip-shaped positive electrode current collector composed of aluminum foil to form the positive electrode mixture layer on both surfaces of the positive electrode current collector and the positive electrode exposed part with 7 mm of width substantially at the center of the positive electrode current collector in the longitudinal direction. After that, the coating film was dried, the coating film was compressed, and after that, it was cut to have a predetermined electrode size.

After that, one end part of an aluminum-made positive electrode tab with 3.5 mm of width was pasted on the positive electrode exposed part by ultrasonic welding. Furthermore, a protection member with 11 mm of width in which cuts with 1 mm of length at intervals of 1 mm were set from each of both end parts was pasted on the positive electrode tab and the positive electrode exposed part thereby to produce the positive electrode. The cuts extended within the positive electrode mixture layer and did not face the positive electrode tab.

### [Production of Negative Electrode]

Ninety-seven pts. mass of artificial graphite, 1.5 pts. mass of carboxymethylcellulose (CMC), and 1.5 pts. mass of styrene-butadiene rubber (SBR) were mixed, and an appropriate amount of water was added to prepare the negative electrode slurry. Next, intermittent application of the negative electrode slurry was performed on both surfaces of a long strip-shaped negative electrode current collector composed of copper foil to form the negative electrode mixture layer and the negative electrode exposed part with 7 mm of width on the surfaces of the negative electrode current collector. After that, the coating film was dried, the coating film was compressed, and after that, it was cut to have a predetermined electrode size. Furthermore, a nickel-made negative electrode tab with 3.5 mm of width was pasted on the negative electrode exposed part by ultrasonic welding thereby to produce the negative electrode.

### [Production of Electrode Assembly]

The aforementioned positive electrode and the aforementioned negative electrode were wound via separators composed of polyethylene-made microporous films thereby to produce the electrode assembly.

### [Preparation of Non-Aqueous Electrolyte]

LiPF₆ was dissolved in a mixed solvent composed of ethylene carbonate (EC) and dimethyl carbonate (DMC) (EC:DMC=30:70 in volume ratio at 1 atm and 25°C) so as to have 1.5 mol/L of concentration to prepare the non-aqueous electrolyte.

### [Impact Test 1]

Insulating plates were arranged on the upside and the downside of the aforementioned electrode assembly, respectively, and the electrode assembly was housed in a battery case. Next, the negative electrode tab was welded onto the bottom part of the battery case, and the positive electrode tab was welded to a sealing assembly having an internal pressure-operational vent valve. After that, the electrolytic solution was injected to the interior of the battery case by a reduced-pressure scheme, and after that, the opening end part of the battery case was sealed such that the opening end part of the battery case was crimped onto the sealing assembly via a gasket to produce a cylinder-shaped secondary battery.

Next, an impact test was performed using the produced battery. Charging up to 4.2 V was performed through constant current charging at 0.3 C in a 25°C atmosphere. After that, the test was performed in conformity with the T6 impact tests of the UN transport test conditions (a metal-made round rod with 15.8 mm of diameter is placed at the center of a battery and a weight of 9.1 kg is caused to drop from 61 cm of height) to examine the presence or absence of firing of the battery after the test. For the battery that did not fire, the presence or absence of internal short circuit was also examined.

### [Impact Test 2]

A testing battery was produced similarly to the aforementioned Impact Test 1 except that the electrolytic solution was not injected to the interior of the battery case. After that, a test was performed in conformity with the T6 impact tests under the UN transport test conditions to examine the presence or absence of fracture at portions, of the separator, facing both end parts of the protection member inside the testing battery after the test.

### <Examples 2 to 6>

Impact tests and separator tolerance tests were performed similarly to Example 1 except that lengths and intervals of the cuts of the protection members were changed as in Table 1. In Examples 2 to 5, the cuts did not face the positive electrode tab similarly to Example 1. Meanwhile, in Example 6, the cuts faced the positive electrode tab.

### <Comparative Example>

An impact test and a separator tolerance test were performed similarly to Example 1 except that cuts were not provided in the protection member.

Table 1 presents the evaluation results for Examples 1 to 6 and Comparative Example.

**[Table 1]**

| | Cuts | | | Impact Test 1 (Presence or Absence of Firing) | Impact Test 2 (Presence or Absence of Fracture of Separator) |
|---|---|---|---|---|---|
| | Length (mm) | Interval (mm) | Presence or Absence of Facing Positive Electrode Tab | | |
| Example 1 | 1.0 | 1.0 | Absent | Absent | Absent |
| Example 2 | 1.0 | 0.5 | Absent | Absent | Absent |
| Example 3 | 0.5 | 1.0 | Absent | Absent | Absent |
| Example 4 | 2.0 | 1.0 | Absent | Absent | Absent |
| Example 5 | 1.0 | 2.0 | Absent | Absent | Absent |
| Example 6 | 4.0 | 1.0 | Present | Absent | Absent |
| Comparative Example | Absent | Absent | - | Present | Present |

In Examples 1 to 5, Impact Tests 1 did not exhibit short circuit or firing. In Example 6, while Impact Test 1 did not exhibit firing, the occurrence of internal short circuit was confirmed. While in Example 6, similarly to Examples 1 to 5, Impact Test 2 did not exhibit fracture of the separator caused by both ends of the protection member, the cuts were formed in the protection member so as to face the positive electrode tab differently from Examples 1 to 5. It can be though that in Example 6, fracture of the separator by the positive electrode tab caused internal short circuit even though it did not result in firing. As above, even though safety of the battery is secured even when the cuts face the positive electrode tab, the cuts preferably do not face the positive electrode tab in view of restraining internal short circuit. Meanwhile, the comparative example exhibited firing in Impact Test 1. Moreover, the comparative example exhibited fracture of the separator caused by the steps of the protection member in Impact Test 2.

As above, it has been confirmed that the non-aqueous electrolyte secondary battery of the present embodiment is excellent in safety in the case of reception of impact from the outside.

### REFERENCE SIGNS LIST

10 non-aqueous electrolyte secondary battery, 11 positive electrode, 12 negative electrode, 13 separator, 14 electrode assembly, 15 battery case, 16 exterior member, 17 sealing assembly, 18, 19 insulating plate, 20 positive electrode tab, 20a one end part, 20b another end part, 21 negative electrode tab, 22 projecting portion, 23 filter, 24 lower vent member, 25 insulating member, 26 upper vent member, 27 cap, 28 gasket, 30 positive electrode current collector, 32 positive electrode mixture layer, 34 positive electrode exposed part, 36 protection member, 38 cut, 40 negative electrode current collector, 42 negative electrode mixture layer, 44 negative electrode exposed part

## Claims

1. A non-aqueous electrolyte secondary battery, comprising:
a winding-shaped electrode assembly having a belt-shaped positive electrode and a belt-shaped negative electrode wound along their longitudinal direction via a separator; and
a battery case housing the electrode assembly, wherein
the positive electrode has
a positive electrode current collector,
a positive electrode mixture layer formed on at least part of a surface of the positive electrode current collector,
a conductive positive electrode tab having one end part connected to a positive electrode exposed part in which the positive electrode mixture layer is not formed on the surface of the positive electrode current collector and another end part extending from the positive electrode current collector in a transverse direction of the positive electrode, and
a protection member provided on the surface of the positive electrode current collector so as to cover at least the one end part of the positive electrode tab and the positive electrode exposed part, and
the protection member has one or a plurality of cuts in each of both end parts of the protection member in the longitudinal direction of the positive electrode.

2. The non-aqueous electrolyte secondary battery according to claim 1, wherein the cut does not face the positive electrode tab.

3. The non-aqueous electrolyte secondary battery according to claim 1 or 2, wherein the protection member is an adhesive tape having a base material part and an adhesive part.
